# EUROPEAN PATENT SPECIFICATION

(11) **EP 3 170 800 B1**
(45) Date of publication and mention of the grant of the patent: **04.09.2019**
(21) Application number: 15822701.7
(22) Date of filing: 09.07.2015
(51) Int. Cl.: C03C 27/06, C03C 27/10, E06B 3/66, E06B 3/677

(54) **VACUUM MULTILAYER GLASS AND METHOD FOR MANUFACTURING VACUUM MULTILAYER GLASS**
MEHRSCHICHTIGES VAKUUMGLAS UND VERFAHREN ZUR HERSTELLUNG EINES MEHRSCHICHTIGEN VAKUUMGLASES
VERRE MULTICOUCHE À VIDE D'AIR ET PROCÉDÉ DE FABRICATION DE VERRE MULTICOUCHE À VIDE D'AIR

(30) Priority: 18.07.2014 JP 2014147909
(43) Date of publication of application: 24.05.2017
(73) Proprietor: AGC Inc., Tokyo 100-8405 (JP)
(72) Inventor: IKEDA, Yusuke, Tokyo 100-8405 (JP); ITO, Hiroshige, Tokyo 100-8405 (JP); YOKOYAMA, Mika, Tokyo 100-8405 (JP); WATANABE, Tomoya, Tokyo 100-8405 (JP); KATO, Keisuke, Tokyo 100-8405 (JP)
(74) Representative: Müller-Boré & Partner Patentanwälte PartG mbB
(86) International application number: PCT/JP2015/069798
(87) International publication number: WO 2016/009949

(56) References cited:
- JP-A- 2001 180 985
- US-A1- 2002 012 111
- US-A1- 2009 155 500
- US-A1- 2011 006 252

## Description

### BACKGROUND OF THE INVENTION

### 1. Field of the Invention

The present invention relates to vacuum insulating glass and a production method of vacuum insulating glass.

### 2. Description of the Related Art

So-called "vacuum insulating glass", which is formed by stacking a pair of glass substrates in layers with a gap between the glass substrates and maintaining the gap in a vacuum state, has an excellent heat insulation capability and is therefore widely used for window glass units of, for example, buildings and houses.

Vacuum insulating glass is produced, for example, as follows.

First, a first glass substrate and a second glass substrate are prepared. A joint layer is formed along the circumference on a surface of one of the first glass substrate and the second glass substrate. Next, an assembly body is formed by stacking the first and second glass substrates in layers facing each other having the joint layer therebetween.

Next, the assembly body is heated, the joint layer is melted and softened, and the first and the second glass substrates are joined together. With the above operations, a gap is formed.

Next, the inside of the gap is decompressed by utilizing a through hole provided beforehand in the first glass substrate. After that, a sealing plate is arranged to cover the through hole of the first glass substrate, and the through hole is sealed to produce vacuum insulating glass.

In the vacuum insulating glass produced as described above, after the decompression process, a sufficient degree of vacuum is obtained in the gap. However, there is a case where the degree of vacuum of the gap decreases as time passes due to an influence of a gas released from, for example, the glass substrates and/or the joint layer. This kind of decrease of the degree of vacuum leads to a decrease of heat insulation performance of the vacuum insulating glass.

Therefore, in order to alleviate this kind of a problem, normally, a getter is provided in the gap of the vacuum insulating glass. By providing the getter in the gap, it is possible to suppress the decrease of degree of vacuum due to the above-described released gas (refer to, for example, PLT 1).

### [Citation List]

### [Patent Literature]

[PLT 1] Japanese Registered Utility Model No. 3162832.

The documents US 2002/0121111 A1, US 2009/0155500 A1 and US 2011/0006252 describe vacuum insulating units comprising a getter material.

### SUMMARY OF THE INVENTION

### [TECHNICAL PROBLEM]

However, in order to activate the getter, it is necessary to heat the getter to become high temperature by using, for example, an induction heating method after an opening of the first glass substrate is sealed in the above-described production process. As a result, in the conventional method, the production process of the vacuum insulating glass is complicated and it is difficult to improve production efficiency, which is a problem.

The present invention has been made in view of the above problem, and it is an object of the present invention to provide a production method in which it is possible to simplify the production process. Further, it is an object of the present invention to provide vacuum insulating glass with a structure which enables a simplified production process.

### [SOLUTION TO PROBLEM]

According to an embodiment of the present invention, a production method of vacuum insulating glass is defined in claim 1 is provided.

Further, according to an embodiment of the present invention a vacuum insulating glass as defined in claim 7 is provided.

### [ADVANTAGEOUS EFFECTS OF INVENTION]

According to an embodiment, it is possible to provide a production method of vacuum insulating glass in which a production process is simplified. Further, according to an embodiment, it is possible to provide vacuum insulating glass with a structure which enables a simplified production process.

### BRIEF DESCRIPTION OF THE DRAWINGS

Fig. 1 is a drawing illustrating a flowchart for a production method of vacuum insulating glass according to an embodiment of the present invention.
Fig. 2 is a drawing illustrating a schematic configuration of a first glass substrate which may be used in the production method of the vacuum insulating glass.
Fig. 3 is a drawing illustrating a schematic configuration of an assembly body which may be used in the production method of the vacuum insulating glass.
Fig. 4 is a drawing illustrating examples of steps S130 to S140 according to a first production method.
Fig. 5 is a drawing illustrating examples of steps S130 to S140 according to a second production method.
Fig. 6 is a drawing illustrating an example of a method for supporting a getter when sealing a through hole by using a sealing plate.
Fig. 7 is a drawing illustrating an example of a method for supporting a getter when sealing a through hole by using a sealing plate.
Fig. 8 is a drawing illustrating an example of a method for supporting a getter when sealing a through hole by using a sealing plate.
Fig. 9 is a drawing illustrating a schematic configuration example of vacuum insulating glass according to an embodiment of the present invention.

### DETAILED DESCRIPTION OF THE PREFERRED EMBODIMENTS

In the following, an embodiment of the present invention will be described.

### (Production method of vacuum insulating glass according to an embodiment of the present invention)

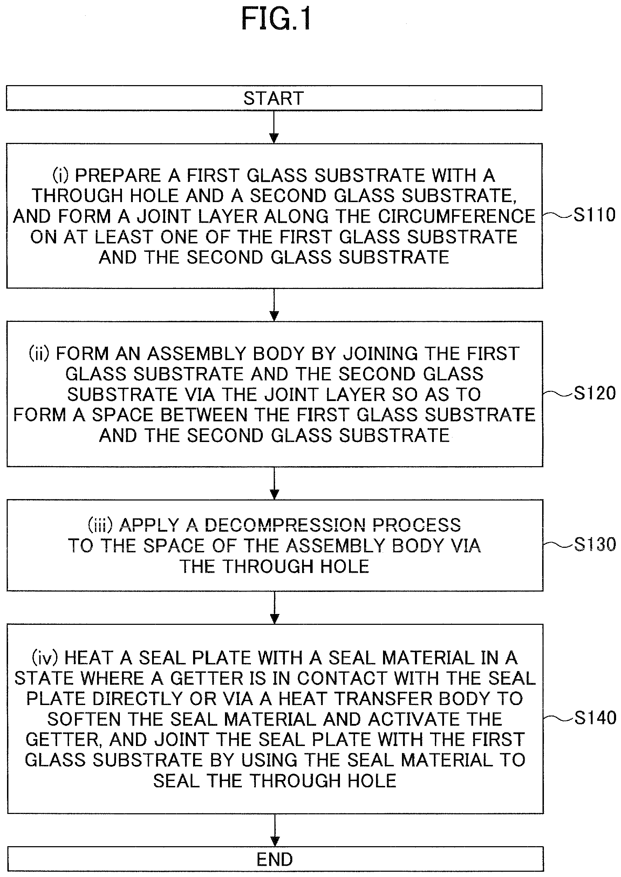

In the following, referring to Fig. 1, a production method of vacuum insulating glass according to an embodiment (hereinafter, referred to as a "first production method") will be described.

Fig. 1 illustrates a flowchart of a first production method.

As illustrated in Fig. 1, the first production method includes a step (i) of preparing a first glass substrate with a through hole and a second glass substrate and forming a joint layer in the circumference of at least one of the first glass substrate and the second glass substrate (step S110); a step (ii) of forming an assembly body by joining the first glass substrate to the second glass substrate via the joint layer so as to form a gap between the first glass substrate and the second glass substrate (step S120); a step (iii) of applying a decompression process to the gap of the assembly body via the through hole (step S130); and a step (iv) of heating a sealing plate in a state where the sealing plate with a sealing material is in contact with a getter via a heat transfer body so that the sealing material is softened and the getter is activated, and joining the sealing plate to the first glass substrate by the sealing material so that the through hole is sealed (step S140).

In this type of a production method of vacuum insulating glass, it is possible to use heat transferred from the sealing plate for activating the getter. In other words, it is possible to perform the through hole sealing process by the sealing plate and the getter activation process at the same time.

Therefore, in the production method of the vacuum insulating glass according to an embodiment, it is possible to simplify the production process and to improve production efficiency of the vacuum insulating glass.

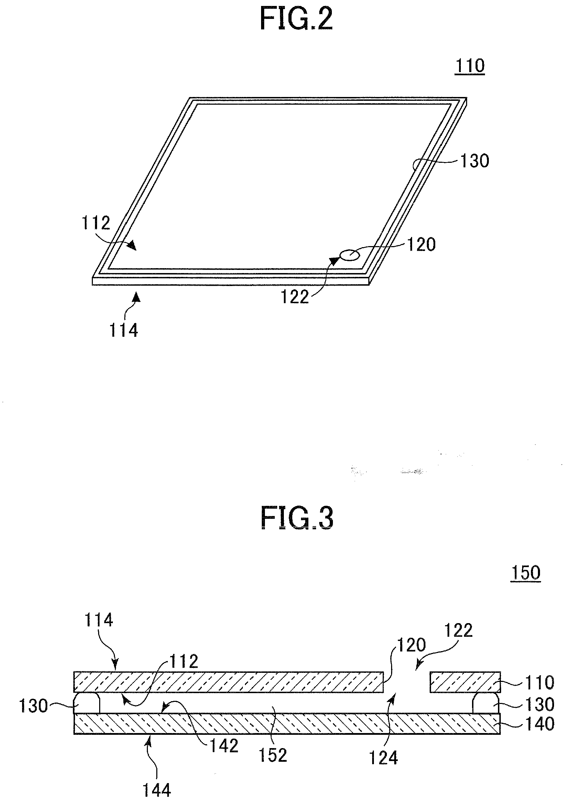

In the following, referring to Fig. 2 through Fig. 4, processes will be described in detail.

### (Step S110)

First, a first glass substrate with a through hole and a second glass substrate are prepared.

The first glass substrate includes a first surface and a second surface. The through hole extends from a first opening in the first surface to a second opening in the second surface. The second glass substrate includes a third surface and a fourth surface.

A position at which the through hole is formed in the first glass substrate is not limited to a particular position. However, in a normal case, the through hole is formed at an inconspicuous position of the first glass substrate including, for example, near one of corners of the first glass substrate so as not to degrade the design.

Shapes of the first opening and/or the second opening of the through hole are not limited to a particular shape. The shapes of the first opening and/or the second opening may be, for example, a circle, an oblong, a triangle, or a rectangle. Further, sizes of the first opening and/or the second opening of the through hole are not limited to a particular size. Maximum sizes of the first opening and/or the second opening (e.g., a diameter in case of a circle, a diagonal length in case of a rectangle) may be, for example, in a range between 1 mm and 15 mm.

Further, the shapes and/or the maximum sizes may be different between the first opening and the second opening of the through hole.

Next, a joint layer is formed on a first surface of the first glass substrate.

The above-described first glass substrate is illustrated as a first glass substrate 110 in Fig. 2.

As illustrated in Fig. 2, the first glass substrate 110 includes a first surface 112 and a second surface 114. Further, the first glass substrate 110 includes a through hole 120. The through hole 120 has a first opening 122 in the first surface 112 and a second opening 124 (which cannot be seen in Fig. 2) in the second surface 114.

A joint layer 130 is formed in the circumference of the first surface 112 of the first glass substrate 110. The joint layer 130 is formed in an annular shape outside of the through hole 120.

A form of the joint layer 130 in not limited to a particular form as long as a gap, which is formed when the first glass substrate and the second glass substrate are stacked in layers, can be sealed properly afterwards.

For example, the joint layer 130 may be a glass solidified layer. The glass solidified layer may be formed by, for example, calcining a paste which includes a glass frit. It is possible to adjust a calcining temperature (also, a melting temperature and/or a softening temperature) of the glass solidified layer by changing an amount and composition of the glass frit included in the paste.

It should be noted that a joint layer may also be arranged on one of the surfaces (the third surface) of the second glass substrate. Alternatively, the joint layer may be arranged only on one of the surfaces (the third surface) of the second glass substrate instead of the first glass substrate 110.

### (Step S120)

Next, an assembly body is formed by using the first glass substrate and the second glass substrate prepared in step S110.

An example of a schematic configuration of an assembly body 150 is illustrated in Fig. 3.

As illustrated in Fig. 3, the assembly body 150 is formed by arranging a first glass substrate 110 and a second glass substrate 140 facing each other via a joint layer 130. In other words, the first glass substrate 110 is stacked on the second glass substrate 140 in such a way that a first surface 112 of the first glass substrate 110 faces inside (faces the second glass substrate 140). Similarly, the second glass substrate 140 is stacked on the first glass substrate 110 in such a way that a third surface 142 of the second glass substrate 140 faces inside (faces the first glass substrate 110) and a fourth surface 144 of the second glass substrate 140 faces outside.

With the above operations, a gap 152 is formed between the first glass substrate 110 and the second glass substrate 140.

Afterwards, the assembly body 150 is heated to a temperature equal to or higher than the softening temperature of the joint layer 130. As a result, the first glass substrate 110 and the second glass substrate 140 are joined together via the joint layer 130.

The heating temperature may be different depending on the type of the joint layer 130, and may be, for example, in a range between 250 degrees Celsius and 520 degrees Celsius.

### (Steps S130 to S140)

Next, a vacuum suction process is applied to the gap 152 of the assembly body 150 and the gap 152 is decompressed. Further, the through hole 120 of the first glass substrate 110 is sealed.

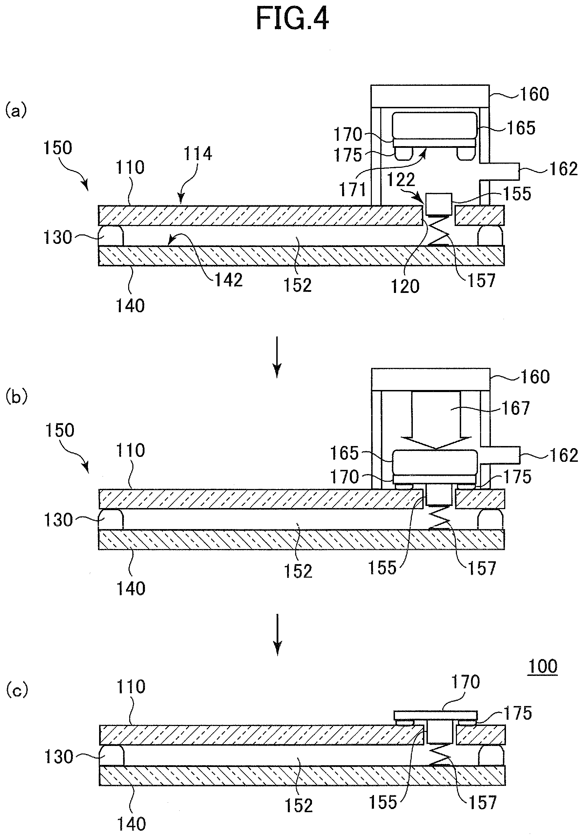

In the following, referring to Fig. 4, examples of steps S130 to S140 will be described.

Fig. 4 illustrates examples of steps S130 to S140.

In the steps S130 to S140, first, the assembly body 150 is arranged in such a way that the first glass substrate 110 is on an upper side and the second glass substrate 140 is on a lower side.

Next, as illustrated in (a) of Fig. 4, a sealing apparatus 160 is arranged on an upper part of the assembly body 150. The sealing apparatus 160 is arranged on the second surface 114 side of the first glass substrate 110 as if surrounding the through hole 120 of the first glass substrate 110.

The sealing apparatus 160 includes an exhaust pipe 162. The exhaust pipe 162 is connected to a vacuum processing unit (not shown in the figure).

Further, the sealing apparatus 160 has an internal space. A heater 165 and a sealing plate 170 are accommodated in the internal space. In the first stage, the heater 165 and the sealing plate 170 are arranged upward in the internal space of the sealing apparatus 160, and are not in contact with the second surface 114 of the first glass substrate 110.

The sealing plate 170 has an annular-shaped sealing material 175 in the circumference of a lower surface 171. The sealing material 175 is arranged on the lower surface 171 of the sealing plate 170 as if surrounding the first opening 122 of the first glass substrate 110 of the assembly body 150 when viewed from above the sealing apparatus 160.

The sealing material 175 may be made of, for example, a material having a softening point in a range between about 250 degrees Celsius and 520 degrees Celsius, including brazing alloys, solders, glass frits, etc. Further, the sealing material 175 may be made of a material having a softening point in a range between about 350 degrees Celsius and 520 degrees Celsius such as a glass solidified layer including glass frits in order to activate a getter 155 in a short period of time. It is preferable that the softening point of the sealing material 175 is in a range between 400 degrees Celsius and 520 degrees Celsius in view of improving production efficiency.

It should be noted that, as illustrated in (a) of Fig. 4, the getter 155 is arranged in the through hole 120 of the assembly body 150 before the sealing apparatus 160 is arranged on the upper part of the assembly body 150.

The getter 155 plays a role of removing a gas generated in the gap 152 after the through hole 120 is sealed. The getter 155 is arranged on a supporting member 157 that is arranged on the third surface 142 of the second glass substrate 140. The supporting member 157 is made of, for example, an elastic member.

In the case where steps S130 to S140 are performed, first, the sealing apparatus 160 is arranged on the assembly body 150. Next, the vacuum processing unit connected to the exhaust pipe 162 of the sealing apparatus 160 operates, and thus, a decompression process is applied to the internal space of the sealing apparatus 160 and also the gap 152 of the assembly body 150.

Further, a gas included in the gap 152 of the assembly body 150 can be efficiently exhausted by heating at least a part of the assembly body 150, preferably the whole assembly body, to 200 degrees Celsius to 400 degrees Celsius while continuing applying the decompression process.

After the gap 152 of the assembly body 150 reaches a sufficiently decompressed state, the sealing plate 170 accommodated upward in the sealing apparatus 160 is pressed downward toward the assembly body 150 as illustrated in (b) of Fig. 4. For the above operation, for example, a mechanism such as an air cylinder mechanism 167 included in the sealing apparatus 160 may be used.

It should be noted that, at this time, if necessary, the temperature of the heater 165 may be increased to a higher temperature such as 250 degrees Celsius to 520 degrees Celsius. With the above operation, the sealing material 175 arranged on the sealing plate 170 is softened. At this time, if the assembly body 150 is preheated, the assembly body 150 will not crack when the assembly body 150 is contacted by the sealing plate 170 including the sealing material 175.

As illustrated in (b) of Fig. 4, when the sealing plate 170 is pressed downward toward the assembly body 150, the sealing plate 170 is joined to the second surface 114 of the first glass substrate 110 included in the assembly body 150 by the softened sealing material 175. As a result, the through hole 120 included in the first glass substrate 110 can be sealed by the sealing plate 170.

Further, when the sealing plate 170 is pressed downward toward the assembly body 150, the getter 155 supported by the supporting member 157 is moved downward in the assembly body 150 due to elastic deformation of the supporting member 157 caused by the pressing from the lower surface 171 of the sealing plate 170. As a result, after the sealing plate 170 is joined to the first glass substrate 110, the getter 155 can be accommodated in the gap 152.

Afterwards, when the sealing apparatus 160 is removed, vacuum insulating glass 100 is obtained in which the getter 155 is sealed in the gap 152 (more precisely, between the first glass substrate 110 and the second glass substrate 140) as illustrated in (c) of Fig. 4.

Here, as illustrated in (b) of Fig. 4, in the first production method when the sealing plate 170 is pressed downward toward the assembly body 150, the lower surface 171 of the sealing plate 170 contacts the getter 155 that is supported by the supporting member 157. Further, the sealing plate 170 is heated to a high temperature by the heater 165 in order to soften the sealing material 175. As a result, the getter 155 is activated by heat transferred from the sealing plate 170.

Therefore, in the first production method, it is possible to perform the sealing process of the through hole 120 of the first glass substrate 110 and the activation process of the getter 155 at the same time, and to simplify the production process of the vacuum insulating glass. Further, with the above operation, it is possible to increase production efficiency of the vacuum insulating glass 100.

### (Another production method of vacuum insulating glass according to an embodiment of the present invention)

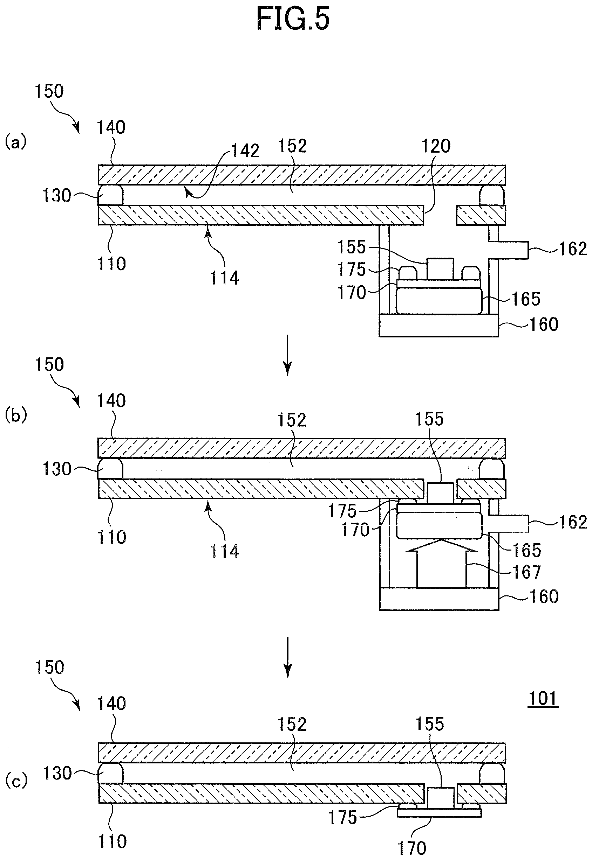

Next, referring to Fig. 5, another production method of vacuum insulating glass according to an embodiment (hereinafter, referred to as a "second production method") will be described.

It should be noted that the flowchart of the first production method illustrated in Fig. 1 can be almost equally applied to the second production method. However, in the second production method, steps S130 to S140 are different from the first production method.

Therefore, here, steps S130 to S140 in the second production method will be described in detail. It should be noted that in the following description, each unit will be indicated by using the same reference numerals as used in Fig. 4.

Fig. 5 illustrates examples of steps S130 to S140 in the second production method.

As illustrated in (a) of Fig. 5, the assembly body 150 is also used in the second production method, in which assembly body 150, the first glass substrate 110 and the second glass substrate 140 are joined together via the joint layer 130.

However, in the second production method, the assembly body 150 is arranged in such a way that the first glass substrate 110 is on a lower side of the assembly body 150. As a result, the sealing apparatus 160 is arranged on the lower side of the assembly body 150. More specifically, the sealing apparatus 160 is arranged on the second surface 114 side of the first glass substrate 110 as if surrounding the through hole 120 of the first glass substrate 110.

Further, in the second production method, a getter 155 is arranged on the sealing plate 170 as illustrated in (a) of Fig. 5. As a result, a supporting member 157 as illustrated in Fig. 4 is not used.

In the case where steps S130 to S140 are performed, first, the sealing apparatus 160 is arranged beneath the assembly body 150. Next, the vacuum processing unit connected to the exhaust pipe 162 of the sealing apparatus 160 operates, and thus, a decompression process is applied to the internal space of the sealing apparatus 160 and also the gap 152 of the assembly body 150.

Further, a gas included in the gap 152 of the assembly body 150 can be efficiently exhausted by heating at least a part of the assembly body 150, preferably the whole assembly body, to 200 degrees Celsius to 400 degrees Celsius while continuing applying the decompression process.

After the gap 152 of the assembly body 150 reaches a sufficiently decompressed state, the sealing plate 170 accommodated in the bottom of the sealing apparatus 160 is pressed upward toward the assembly body 150 as illustrated in (b) of Fig. 5. For the above operation, for example, a mechanism such as the air cylinder mechanism 167 included in the sealing apparatus 160 may be used.

It should be noted that, at this time, if necessary, the temperature of the heater 165 may be increased to a higher temperature such as 250 degrees Celsius to 520 degrees Celsius. With the above operation, the sealing material 175 arranged on the sealing plate 170 is softened. At this time, if the assembly body 150 is preheated, the assembly body 150 will not crack when the assembly body 150 is contacted by the sealing plate 170 including the sealing material 175.

When the sealing plate 170 is pressed upward toward the assembly body 150, the sealing plate 170 is joined to the second surface 114 of the first glass substrate 110 included in the assembly body 150 by the softened sealing material 175. As a result, the through hole 120 included in the first glass substrate 110 can be sealed by the sealing plate 170.

Afterwards, when the sealing apparatus 160 is removed, vacuum insulating glass 101 is obtained in which the getter 155 is sealed in the gap 152 (between the first glass substrate 110 and the second glass substrate 140) as illustrated in (c) of Fig. 5.

Here, as illustrated in (b) of Fig. 5, also in the second production method, the sealing plate 170 is heated to a high temperature by the heater 165 in order to soften the sealing material 175 when sealing the through hole 120 by the sealing plate 170. As a result, the getter 155 is activated by heat transferred from the sealing plate 170.

Therefore, also in the second production method, it is possible to perform the sealing process of the through hole 120 of the first glass substrate 110 and the activation process of the getter 155 at the same time, and to simplify the production process of the vacuum insulating glass 101. Further, with the above operation, it is possible to increase production efficiency of the vacuum insulating glass 101.

As described above, referring to Fig. 1 through Fig. 5, a production method of vacuum insulating glass according to an embodiment has been described. However, a production method according to an embodiment of the present invention is not limited to the above.

For example, in the first production method and the second production method, the getter 155 is activated in a state where the getter 155 is directly contacted by the sealing plate 170. However, the above production methods are just examples. It is not necessary for the getter 155 to be directly in contact with the sealing plate 170. In other words, the getter 155 may be arranged in any form as long as the getter 155 is activated by heat transferred from the sealing plate 170 when sealing the through hole 120 by the sealing plate 170.

For example, the getter 155 may be thermally contacted by the sealing plate 170 via a "heat transfer body". Here, the "heat transfer body" means any member whose thermal conductivity is higher than air. The heat transfer body may be metal, ceramic, glass, etc.

For example, in an example illustrated in Fig. 5, the getter 155 may be arranged on the sealing plate 170 via a heat transfer body instead of arranged on the sealing plate 170 directly.

Further, in an example illustrated in Fig. 4, the getter 155 is supported by the supporting member 157 made of an elastic member. However, this is just an example, and the getter 155 may be supported by other methods.

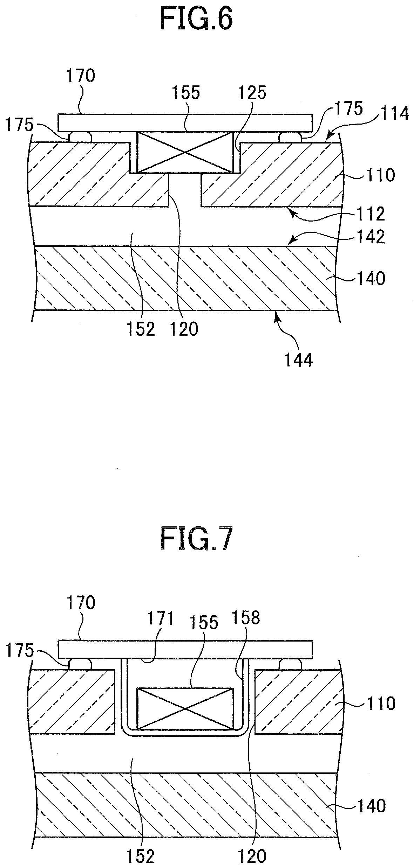

The other methods for supporting the getter 155 when sealing the through hole 120 by the sealing plate 170 are illustrated in Fig. 6 through Fig. 8.

For example, in Fig. 6, the through hole 120 included in the first glass substrate 110 has an extended part 125 with a greater size on the second surface 114 side and the getter 155 is arranged and accommodated in the extended part 125. In this case, the supporting member 157 as illustrated in Fig. 4 can be omitted. Here, it should be noted that at least one through hole (not shown in the figure) is formed in the getter 155, and it is possible to perform a decompression process of the gap via the through hole. Alternatively, the getter 155 is arranged in such a way that the getter 155 does not completely close the through hole 120 of the first glass substrate 110.

Further, in an example illustrated in Fig. 7, the sealing plate 170 includes a hanging member 158 on the lower surface 171, and the getter 155 is supported by the hanging member 158. The supporting member 157 as illustrated in Fig. 4 can be omitted also in this case. It should be noted that, in this example, the hanging member 158 functions as a heat transfer body, and the getter 155 is in contact with the hanging member 158.

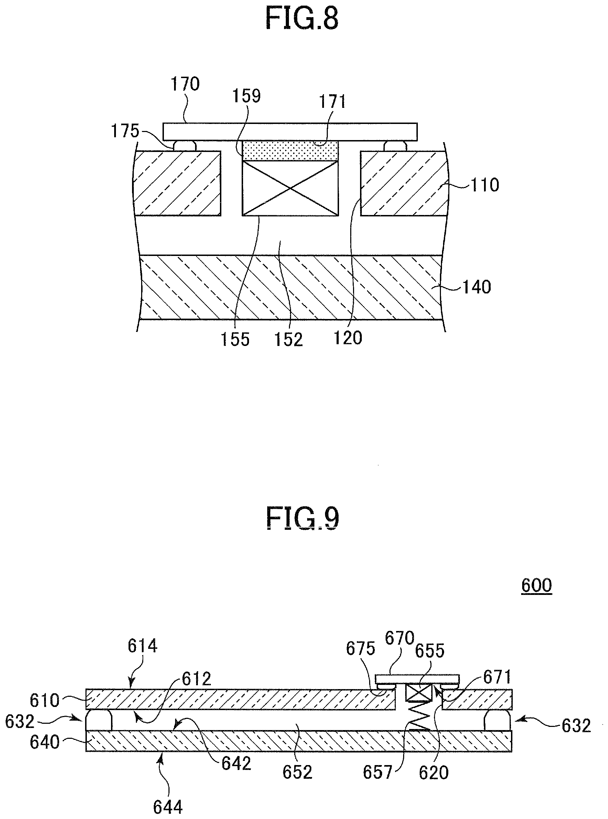

As illustrated in Fig. 8, the getter 155 is coupled to the sealing plate 170 via an adhesive member 159 arranged on the lower surface 171 of the sealing plate 170. The supporting member 157 as illustrated in Fig. 4 can be omitted also in this case. It should be noted that in this case of an example, it is necessary that the adhesive member 159 is made of a material capable of withstanding the temperature at which the sealing process by the sealing plate 170 is applied to the through hole 120.

### (Vacuum insulating glass according to an embodiment of the present invention)

Next, referring to Fig. 9, a configuration example of vacuum insulating glass according to an embodiment (hereinafter, referred to as "first vacuum insulating glass") will be described.

Fig. 9 illustrates a schematic sectional view of first vacuum insulating glass 600.

As illustrated in Fig. 9, the first vacuum insulating glass 600 includes a first glass substrate 610 and a second glass substrate 640. The first glass substrate 610 has a first surface 612 and a second surface 614, and the second glass substrate 640 has a third surface 642 and a fourth surface 644.

A gap 652 is formed between the first surface 612 of the first glass substrate 610 and the third surface 642 of the second glass substrate 640, and the gap 652 is surrounded and sealed up by a sealing member 632.

The sealing member 632 may be made of the joint layer 130 illustrated in Fig. 2. Alternatively, the sealing member 632 may be made differently.

Further, the first glass substrate 610 has a through hole 620 penetrating from the first surface 612 to the second surface 614. The through hole 620 is sealed by the sealing plate 670 joined to the second surface 614 side of the first glass substrate 610 via a sealing material 675.

Further, a getter 655 is arranged in the through hole 620. The getter 655 is supported by a supporting member 657 arranged in the gap 652. The supporting member 657 may be an elastic member.

The first vacuum insulating glass 600 with the above configuration can be produced by using a production method of vacuum insulating glass such as the above-described first production method. Therefore, it is possible to simplify the production process of the first vacuum insulating glass 600. Further, therefore, the first vacuum insulating glass 600 can be produced efficiently.

It should be noted that in the first vacuum insulating glass 600 illustrated in Fig. 9, the getter 655 is arranged to be in contact with a lower surface 671 of the sealing plate 670. Further, the getter 655 is accommodated in the gap 652 in a state where the getter 655 is supported by the supporting member 657.

However, an arrangement form of the getter 655 is not limited to the above form. For example, as illustrated in examples in Fig. 6 and Fig. 7, the getter 655 may be supported by the extended part 125 of the first glass substrate, the hanging member 158, instead of the supporting member 657.

Further, the sealing plate 670 and the getter 655 of the first vacuum insulating glass 600 has configurations as illustrated in Fig. 8.

Furthermore, in the first vacuum insulating glass 600, other "heat transfer bodies" may be arranged between the getter 655 and the sealing plate 670.

### (Members of vacuum insulating glass)

Next, members included in the vacuum insulating glass 600 according to an embodiment of the present invention will be described. It should be noted that the reference numerals illustrated in Fig. 9 will be used for describing the members.

### (Glass substrates 610, 640)

Sizes and compositions of the glass substrates 610 and 640 are not limited to particular sizes and compositions. Any glass substrate used for conventional vacuum insulating glass may be used for the glass substrates 610 and 640.

It should be noted that the first glass substrate 610 and the second glass substrate 640 may have different compositions. Further, various types of functional coatings may be arranged on the first glass substrate 610 and/or the second glass substrate 640

### (Gap 652)

If necessary, multiple spacers may be arranged in the gap 652. With the spacers, it is easy to maintain a height of the gap 652 (a distance between the first surface 612 of the first glass substrate 610 and the third surface 642 of the second glass substrate 640) at a desired value. However, the spacers may or may not be arranged.

### (Sealing member 632)

A conventional sealing member can be used for the sealing member 632 arranged in the circumference of the gap 652. The sealing member 632 may be made of, for example, the joint layer 130 illustrated in Fig. 2.

In this case, the joint layer 130 may be a glass solidified layer.

### (Sealing plate 670)

The sealing plate 670 may be, for example, metal, ceramic, glass, etc. It is preferable that the sealing plate 670 be metal such as aluminum.

A thickness of the sealing plate 670 may be, for example, but not limited to, in a range between 0.03 mm and 3 mm.

### (Sealing material 675)

The sealing material 675 may be, for example, a glass solidified layer. In this case, the glass solidified layer may have a composition illustrated in the following Table 1.

**[Table 1]**

| COMPOSITION | CONTENT (MASS%) |
|---|---|
| Bi₂O₃ | 70∼90 |
| ZnO | 5∼15 |
| B₂O₃ | 2-8 |
| Al₂O₃ | 0.1∼5 |
| SiO₂ | 0.1∼2 |
| CeO₂ | 0.1∼5 |
| Fe₂O₃ | 0.01∼0.2 |
| CuO | 0.01∼5 |

It should be noted that the softening temperature of the glass solidified layer may be in a range between about 350 degrees Celsius and 520 degrees Celsius.

### (Getter 655)

Any material used for conventional vacuum insulating glass may be used for the getter 655. For example, a non evaporative getter material such as a Ze-V type porous sintered body may be used as the getter 655.

### (Supporting member 657)

A material of the supporting member 657 is not limited to a particular material as long as the material is heat-resistant during the sealing process of the through hole 620 of the first glass substrate 610. The supporting member 657 may be, for example, a metal such as aluminum or stainless steel.

The supporting member 657 may be an elastic member (e.g., a spring-shaped member). Alternatively, the supporting member 657 may be a wool-like member.

### [INDUSTRIAL APPLICABILITY]

The present invention can be used for vacuum insulating glass used as a window glass unit of a building.

### [DESCRIPTION OF THE REFERENCE NUMERALS]

100, 101, 600 Vacuum insulating glass
110, 610 First glass substrate
112, 612 First surface
114, 614 Second surface
120, 620 Through hole
122 First opening
124 Second opening
125 Extended part
130 Joint layer
140, 640 Second glass substrate
142, 642 Third surface
144, 644 Fourth surface
150 Assembly body
152, 652 Gap
155, 655 Getter
157, 657 Supporting member
158 Hanging member
159 Adhesive member
160 Sealing apparatus
162 Exhaust pipe
165 Heater
167 Air cylinder mechanism
170, 670 Sealing plate
171, 671 Lower surface
175, 675 Sealing material
632 Sealing member

## Claims

1. A production method of a vacuum insulating glass comprising:
a step (a) of forming an assembly body by joining a first glass substrate with a through hole to a second glass substrate via a joint layer so as to form a gap between the first glass substrate and the second glass substrate;
a step (b) of applying a decompression process to the gap of the assembly body via the through hole of the first glass substrate; and
a step (c) of sealing the through hole by using a sealing plate with a sealing material, the sealing including heating the sealing material to be softened, joining the sealing plate to the first glass substrate, and sealing the through hole, wherein in the step (c), by heating the sealing plate together with the sealing material in a state where the sealing plate is in contact with a getter via a heat transfer body, the getter is heated, and the getter is arranged in the gap in an activated state before the step (c) is completed, wherein the heat transfer body is an adhesive member.

2. The production method according to claim 1, wherein, in the step (c), the getter is arranged in a state where the getter is supported by a supporting member arranged in the gap.

3. The production method according to claim 2, wherein the supporting member is an elastic member.

4. The production method according to claim 1, wherein the assembly body is arranged in such a way that the lower side of the assembly body is the first glass substrate and the upper side of the assembly body is the second glass substrate, and
the step (c) is performed in a state where the getter is arranged on an upper surface of the sealing plate on the first glass substrate side.

5. The production method according to any one of claims 1 to 4, wherein the step (b) is performed in a state where at least a part of the assembly body is heated.

6. The production method according to any one of claims 1 to 5, wherein the sealing material is softened in a range between 350 degrees Celsius and 520 degrees Celsius.

7. A vacuum insulating glass comprising:
a first glass substrate; and
a second glass substrate, the first glass substrate and the second glass substrate having a gap therebetween, wherein the first glass substrate includes a first surface and a second surface, the first surface being closer to the gap, and a through hole penetrating from the first surface to the second surface, the through hole being sealed by a sealing plate that is joined to the second surface of the first glass substrate via a sealing material, and
the sealing plate is in contact with a getter via a heat transfer body, wherein the heat transfer body is an adhesive member.

8. The vacuum insulating glass according to claim 7, wherein the getter is supported by a supporting member arranged in the gap.

9. The vacuum insulating glass according to claim 8, wherein the supporting member is made of an elastic member.

10. The vacuum insulating glass according to claim 7, wherein the through hole has a first opening on the first surface side of the first glass substrate and a second opening on the second surface side of the first glass substrate,
the second opening has a size greater than the first opening, and
the getter is accommodated by the second opening of the through hole.

11. The vacuum insulating glass according to any one of claims 7 to 10, wherein the sealing material is a glass solidified layer whose softening temperature is in a range between 350 degrees Celsius and 520 degrees Celsius.

## Patentansprüche

1. Verfahren zur Herstellung eines Vakuumisolierglases, umfassend:
einen Schritt (a) des Bildens eines Anordnungskörpers durch Verbinden eines ersten Glassubstrats, aufweisend ein Durchgangsloch, mit einem zweiten Glassubstrat über eine Verbindungsschicht, um auf diese Weise einen Hohlraum zwischen dem ersten Glassubstrat und dem zweiten Glassubstrat zu bilden;
einen Schritt (b) des Anwendens eines Druckminderungsprozesses auf den Hohlraum des Anordnungskörpers über das Durchgangsloch des ersten Glassubstrats; und
einen Schritt (c) des Abdichtens des Durchgangslochs unter Verwendung einer Abdichtungsplatte mit einem Abdichtungsmaterial, wobei das Abdichten das Erwärmen des Abdichtungsmaterials, so dass dieses erweicht wird, das Verbinden der Abdichtungsplatte mit dem ersten Glassubstrat und das Abdichten des Durchgangslochs einschließt,
wobei in dem Schritt (c), durch das Erwärmen der Abdichtungsplatte zusammen mit dem Abdichtungsmaterial in einem Zustand, wo die Abdichtungsplatte in Kontakt mit einem Getter über einen Wärmeübertragungskörper steht, der Getter erwärmt wird, und der Getter in dem Hohlraum in einem aktivierten Zustand angeordnet ist, bevor der Schritt (c) abgeschlossen ist, wobei der Wärmeübertragungskörper ein Haftelement ist.

2. Herstellungsverfahren nach Anspruch 1, wobei, in dem Schritt (c), der Getter in einem Zustand angeordnet ist, wo der Getter durch ein Stützelement, angeordnet in dem Hohlraum, gestützt wird.

3. Herstellungsverfahren nach Anspruch 2, wobei das Stützelement ein elastisches Element ist.

4. Herstellungsverfahren nach Anspruch 1, wobei der Anordnungskörper in solch einer Weise angeordnet ist, dass die untere Seite des Anordnungskörpers das erste Glassubstrat ist und die obere Seite des Anordnungskörpers das zweite Glassubstrat ist, und
der Schritt (c) in einem Zustand durchgeführt wird, wo der Getter auf einer oberen Oberfläche der Abdichtungsplatte auf der ersten Glassubstratseite angeordnet ist.

5. Herstellungsverfahren nach einem der Ansprüche 1 bis 4, wobei der Schritt (b) in einem Zustand durchgeführt wird, wo mindestens ein Teil des Anordnungskörpers erwärmt ist.

6. Herstellungsverfahren nach einem der Ansprüche 1 bis 5, wobei das Abdichtungsmaterial in einem Bereich zwischen 350 Grad Celsius und 520 Grad Celsius erwärmt wird.

7. Vakuumisolierglas, umfassend:
ein erstes Glassubstrat; und
ein zweites Glassubstrat, wobei das erste Glassubstrat und das zweite Glassubstrat einen dazwischen liegenden Hohlraum aufweisen, wobei das erste Glassubstrat eine erste Oberfläche und eine zweite Oberfläche einschließt, die erste Oberfläche sich näher an dem Hohlraum befindet und ein Durchgangsloch sich von der ersten Oberfläche in Richtung der zweiten Oberfläche erstreckt, das Durchgangsloch durch eine Abdichtungsplatte, welche mit der zweiten Oberfläche des ersten Glassubstrats über ein Abdichtungsmaterial verbunden ist, abgedichtet ist und
die Abdichtungsplatte mit einem Getter über einen Wärmeübertragungskörper in Kontakt steht, wobei der Wärmeübertragungskörper ein Haftelement ist.

8. Vakuumisolierglas nach Anspruch 7, wobei der Getter durch ein Stützelement, angeordnet in dem Hohlraum, gestützt wird.

9. Vakuumisolierglas nach Anspruch 8, wobei das Stützelement aus einem elastischen Element besteht.

10. Vakuumisolierglas nach Anspruch 7, wobei das Durchgangsloch eine erste Öffnung auf der ersten Oberflächenseite des ersten Glassubstrats und eine zweite Öffnung auf der zweiten Oberflächenseite des ersten Glassubstrats aufweist, die zweite Öffnung eine Größe aufweist, welche gegenüber der ersten Öffnung größer ist, und
der Getter durch die zweite Öffnung des Durchgangslochs aufgenommen ist.

11. Vakuumisolierglas nach einem der Ansprüche 7 bis 10, wobei das Abdichtungsmaterial eine glasverfestigte Schicht, deren Erweichungstemperatur in einem Bereich zwischen 350 Grad Celsius und 520 Grad Celsius liegt, ist.

## Revendications

1. Procédé de fabrication d'un verre isolant à vide d'air comprenant :
une étape (a) de formation d'un corps d'assemblage en joignant un premier substrat en verre qui comporte un trou traversant sur un second substrat en verre via une couche de jonction de manière à former un espace entre le premier substrat en verre et le second substrat en verre ;
une étape (b) d'application d'un processus de décompression sur l'espace du corps d'assemblage via le trou traversant du premier substrat en verre ; et
une étape (c) de scellement étanche du trou traversant en utilisant une plaque de scellement étanche avec un matériau de scellement étanche, le scellement étanche incluant le chauffage du matériau de scellement étanche de telle sorte qu'il soit ramolli, la jonction de la plaque de scellement étanche sur le premier substrat en verre et le scellement étanche du trou traversant, dans lequel, au niveau de l'étape (c), en chauffant la plaque de scellement étanche en association avec le matériau de scellement étanche dans un état dans lequel la plaque de scellement étanche est en contact avec un dégazeur via un corps de transfert thermique, le dégazeur est chauffé et le dégazeur est agencé à l'intérieur de l'espace dans un état activé avant que l'étape (c) ne soit terminée, dans lequel le corps de transfert thermique est un élément adhésif.

2. Procédé de fabrication selon la revendication 1, dans lequel, au niveau de l'étape (c), le dégazeur est agencé dans un état dans lequel le dégazeur est supporté par un élément de support qui est agencé à l'intérieur de l'espace.

3. Procédé de fabrication selon la revendication 2, dans lequel l'élément de support est un élément élastique.

4. Procédé de fabrication selon la revendication 1, dans lequel le corps d'assemblage est agencé de telle sorte que le côté inférieur du corps d'assemblage soit le premier substrat en verre et que le côté supérieur du corps d'assemblage soit le second substrat en verre ; et l'étape (c) est réalisée dans un état dans lequel le dégazeur est agencé sur une surface supérieure de la plaque de scellement étanche sur le côté du premier substrat en verre.

5. Procédé de fabrication selon l'une quelconque des revendications 1 à 4, dans lequel l'étape (b) est réalisée dans un état dans lequel au moins une partie du corps d'assemblage est chauffée.

6. Procédé de fabrication selon l'une quelconque des revendications 1 à 5, dans lequel le matériau de scellement étanche est ramolli dans une plage entre 350 degrés Celsius et 520 degrés Celsius.

7. Verre isolant à vide d'air comprenant :
un premier substrat en verre ; et
un second substrat en verre, le premier substrat en verre et le second substrat en verre comportant un espace entre eux, dans lequel le premier substrat en verre inclut une première surface et une seconde surface, la première surface étant plus proche de l'espace, et un trou traversant qui pénètre depuis la première surface jusqu'à la seconde surface, le trou traversant étant scellé de façon étanche au moyen d'une plaque de scellement étanche qui est jointe sur la seconde surface du premier substrat en verre via un matériau de scellement étanche ; et
la plaque de scellement étanche est en contact avec un dégazeur via un corps de transfert thermique, dans lequel le corps de transfert thermique est un élément adhésif.

8. Verre isolant à vide d'air selon la revendication 7, dans lequel le dégazeur est supporté par un élément de support qui est agencé à l'intérieur de l'espace.

9. Verre isolant à vide d'air selon la revendication 8, dans lequel l'élément de support est constitué par un élément élastique.

10. Verre isolant à vide d'air selon la revendication 7, dans lequel le trou traversant comporte une première ouverture sur le côté de la première surface du premier substrat en verre et une seconde ouverture sur le côté de la seconde surface du premier substrat en verre, la seconde ouverture présente une dimension qui est plus importante que celle de la première ouverture, et le dégazeur est logé par la seconde ouverture du trou traversant.

11. Verre isolant à vide d'air selon l'une quelconque des revendications 7 à 10, dans lequel le matériau de scellement étanche est une couche solidifiée de verre dont la température de ramollissement s'inscrit à l'intérieur d'une plage entre 350 degrés Celsius et 520 degrés Celsius.
